# EUROPÄISCHE PATENTSCHRIFT

(11) **EP 3 857 304 B1**
(45) Veröffentlichungstag und Bekanntmachung des Hinweises auf die Patenterteilung: **05.07.2023**
(21) Anmeldenummer: 19783969.9
(22) Anmeldetag: 26.09.2019
(51) Int. Cl.: G03B 13/32, G03B 13/36, G03B 13/20, G03B 17/02, G03B 17/18, H04N 5/222, H04N 23/10, H04N 23/67

(54) **VERFAHREN ZUM FOKUSSIEREN EINER KAMERA**
METHOD FOR FOCUSING A CAMERA
PROCÉDÉ POUR LA MISE AU POINT D'UNE CAMÉRA

(30) Priorität: 26.09.2018 AT 601562018
(43) Veröffentlichungstag der Anmeldung: 04.08.2021
(73) Patentinhaber: Qinematiq GmbH, 1060 Wien (AT)
(72) Erfinder: WAITZ, Martin, 1060 WIEN (AT)
(74) Vertreter: Babeluk, Michael
(86) Internationale Anmeldenummer: PCT/AT2019/060317
(87) Internationale Veröffentlichungsnummer: WO 2020/061605

(56) Entgegenhaltungen:
- EP-A1- 2 793 457
- EP-A1- 2 896 980
- WO-A1-2017/141746
- WO-A1-2017/184056
- WO-A1-2018/096811
- DE-A1- 19 926 559
- US-A1- 2009 016 708
- US-A1- 2016 088 212
- US-A1- 2017 223 261
- US-A1- 2018 239 108

## Beschreibung

Die vorliegende Erfindung betrifft ein Verfahren gemäß dem Oberbegriff von Patentanspruch 1.

Die Fokussierung, dass ist die Einstellung des Fokusbereichs - also die Scharfstellung - einer Kamera auf ein bestimmtes Objekt oder einen bestimmten Punkt im Sichtfeld, ist sowohl für die Fotographie als auch für die Aufnahme von bewegten Bildern wesentlich. Bei bewegten Bildern, also beispielsweise Filmaufnahmen, handelt es sich um eine Reihe von Aufnahmen, welche hintereinander aufgenommen werden. Damit werden für den Betrachter das Objekt oder der Punkt scharf und klar ersichtlich dargestellt und dessen Aufmerksamkeit auf dieses gerichtet. Dazu werden Objekte durch Erkennungsalgorithmen oder durch manuelle Zuordnung erkannt, die Kamera auf diese fokussiert und eventuell auch verfolgt und der Fokus entsprechend nachgestellt. Insbesondere, wenn mehr als ein Objekt im Sichtbereich der Kamera vorhanden ist, kann es sinnvoll sein, eine Zeit lang auf das eine Objekt zu fokussieren und danach den Fokus auf das andere Objekt zu legen.

In der WO 2017/184056 A1 wird ein Verfahren zur Fokusverschiebung von einem ersten Objekt auf ein zweites durch Benutzung eines Bedienelements beschrieben. Dazu müssen diese Objekte zuerst vom Benutzer der Kamera definiert und dann je einem Bedienelement zugeordnet werden, damit dieser weiß, welches Objekt bei betätigen welches Bedienelements scharfgestellt wird. Dies ist für den Benutzer zeitraubend und aufwendig, darüber hinaus vermindert es die Konzentration beim Filmen. Dies ist ein besonderes Problem beim Aufnehmen von Filmen, die eine Vielzahl von unterschiedlichen Szenen beinhalten, bei dem jedes Mal eine neue Objekterkennung und Zuordnung durchgeführt werden muss. Dies verlangsamt die Verwendung der Kamera, da zuerst die Objekte markiert werden müssen und vermindert die Qualität der Aufnahme, da der Benutzer hauptsächlich mit dem Setzen und Zuordnen der Objekte beschäftigt ist und sich nicht auf das Filmen selbst konzentrieren kann. Der Benutzer der Kamera muss vor Beginn der Aufnahme die Zuordnung durchführen, damit schon von Beginn an ein auf ein Objekt fokussiertes Bild gewährleistet ist.

Aufgabe ist damit, ein Verfahren zum Betreiben einer Kamera bereitzustellen, das ein zuverlässiges Fokussieren ermöglicht.

Diese Aufgabe wird erfindungsgemäß durch die Merkmale von Patentanspruch 1 gelöst. Erfindungsgemäß wird das Sichtfeld der Kamera in zumindest zwei Segmente unterteilt. Es werden zumindest den zwei Segmenten jeweils zumindest ein Bedienelement oder zumindest eine Stellung eines Bedienelements zugeordnet und in zumindest zwei Segmenten jeweils zumindest ein Objekt erkannt und verfolgt. Die erkannten zumindest zwei Objekte werden abhängig davon, welchem Segment sie zugeordnet sind, dem jeweiligen Bedienelement oder Stellung des Bedienelements automatisch zugeordnet und bei Betätigung des Bedienelements oder Bringung des Bedienelements in die entsprechende Stellung wird die Kamera auf das dem Bedienelement oder der Stellung des Bedienelements zugeordnete Objekt fokussiert.

Es ist auch ein optinaler Aspekt der Erfindung, dass die Kamera zumindest ein Objekt im Sichtfeld der Kamera visuell erkannt und verfolgt wird, dass Tiefendaten zumindest in einem Teil des Sichtfeldes der Kamera erfasst werden, und zumindest einem Teil der Bildbestandteile des Sichtfelds zugeordnet werden und dass zumindest ein Teil der Tiefendaten zur Erkennung und Verfolgung des zumindest einen Objekts herangezogen werden.

Mit Sichtfeld oder Sichtbereich ist damit jener Bereich gemeint, den die Kamera aufnimmt, also den Bereich in ihrem Blickwinkel, das in Form eines zweidimensionalen oder dreidimensionalen Bildes abgebildet wird.

Mit Segment ist damit ein Teil des Sichtfeldes gemeint. Werden keine Tiefendaten des aufgenommenen Bereichs erfasst, ist das aufgenommene Bild also zweidimensional, dann sind die Segmente vorzugsweise auch zweidimensional. Bei zweidimensionalen Segmenten weisen sie eine Erstreckung entlang der x-Achse und der y-Achse, also entlang der Seitenerstreckung und Höhenerstreckung des Bildes auf und werden durch einen Seitenrand oder Seitenränder begrenzt. Wenn Tiefendaten erfasst werden und den einzelnen Punkten des Sichtfeldes zugeordnet werden, so können die Segmente auch dreidimensional sein.

Mit Objekt ist damit ein Bildbestandteil gemeint, der von besonderem Interesse ist, wie beispielsweise eine Personengruppe, eine einzelne Person, ein Gesicht, ein Auge oder auch ein Fahrzeug, eine Flasche oder ein sonstiger Gegenstand oder Teil eines Gegenstandes. Die Erkennung des Objektes kann automatisch, also auf Grundlage eines Algorithmus oder durch Markierung durch den Benutzer erfolgen.

Mit Objektverfolgung ist dabei gemeint, dass ein Objekt, welches in einer Aufnahme der Kamera identifiziert wurde, in Folgeaufnahmen gesucht wird und dort wieder identifiziert wird. Dies ist insbesondere bei sich bewegenden Objekten wesentlich oder auch, wenn sich die Kamera bewegt. Die Objektverfolgung wird auch als Objekttracking oder Tracking bezeichnet. Die Objektverfolgung unterliegt Methoden der Computer Vision oder des maschinellen Sehens.

Bei der Unterteilung des Sichtfeldes in Segmente können dabei Bereiche des Sichtfeldes auch keinem Segment zugeordnet werden. Mit anderen Worten können im Sichtfeld zumindest zwei Segmente definiert werden. Dabei kann weiters vorgesehen sein, dass sich diese Segmente vorzugsweise nicht überschneiden.

Durch die automatische Zuordnung des Objekts abhängig davon, in welchem Segment es sich befindet, also abhängig von seiner Position im Sichtfeld, wird eine für den Benutzer klare und eindeutige automatische Zuordnung getroffen, wodurch diese die Zuordnung nicht mehr selbst durchführen muss. Damit wird dem Benutzer eine intuitive, einfache und schnelle Bedienbarkeit bereitgestellt. Beispielsweise kann ein erstes Segment die linke und ein zweites Segment die rechte Hälfte des Sichtfeldes der Kamera abdecken und ein erstes Gesicht, welches im ersten Segment erkannt wird einem ersten Bedienelement und ein zweites Gesicht, welches im zweiten Segment erkannt wird einem zweiten Bedienelement zugeordnet werden. Dem Benutzer ist damit schon bei Beginn der Aufnahme klar, auf welches Objekt scharfgestellt wird, wenn er das eine oder andere Bedienelement betätigt. Dabei können natürlich eine Vielzahl von Segmenten vorgesehen sein, welche eine Zuordnung auf eine Vielzahl von Bedienelementen ermöglicht.

Dabei kann vorgesehen sein, dass die Kamera bei Erkennung des ersten Objekts in einem bestimmten Segment automatisch auf dieses fokussiert. Dies ist insbesondere am Filmbeginn, wenn noch keine gezielte Fokussierung durchgeführt wurde vorteilhaft, da so im Moment, bei dem das erste Objekt erkannt wird, dieses scharf gestellt wird und so das Bild gleich zu Beginn eine sinnvolle Fokussierung hat. Dabei kann ein bestimmtes Segment bestimmt werden und der Fokus auf das erste Objekt gerichtet werden, das in diesem Segment erkannt oder zugeordnet wird. Alternativ kann vorgesehen sein, dass auf jenes Objekt fokussiert wird, dass als erstes in einem beliebigen Segment erkannt oder zugeordnet wird. Wenn nach dem ersten Objekt weitere Objekte identifiziert oder definiert werden, so kann der Fokus beim ersten Objekt verbleiben, bis das Betätigen eines Bedienelements oder eine andere Maßnahme oder Trigger die Änderung des Fokus hervorrufen.

Es kann vorgesehen sein, dass im gesamten Sichtfeld oder zumindest einem Teil des Sichtfelds - unabhängig von den Segmenten - eine automatische Objekterkennung durchgeführt wird. Dies erleichtert deren Zuordnung, wenn sie sich in ein Segment begeben.

Die Segmente und auch erkannte oder verfolgte Objekte können auf einem Bildschirm für den Benutzer dargestellt werden. Damit kann dem Benutzer gezeigt werden, wo die Segmente angeordnet sind, welche Form sie haben und welche Objekte erkannt und verfolgt werden und/oder welches Objekt welchem Bedienelement zugeordnet wurde.

Es kann vorgesehen sein, dass die Segmente vom Benutzer in einem Einstellungsschritt, vorzugsweise vor dem Beginn der Aufnahme, im Sichtfeld definiert werden. Dabei können ihm auch zu Hilfe verschiedene Segmentierungen vorgeschlagen werden, aus denen er wählen kann.

Vorzugsweise ist jedem Segment genau ein Bedienelement oder die Stellung eines Bedienelements zugeordnet. Es kann aber auch vorgesehen sein, dass zumindest einem Segment mehrere Bedienelemente zugeordnet sind. Damit können mehrere Objekte, die in einem Segment identifiziert werden, den verschiedenen Bedienelementen des Segments in definierter Art zugeordnet werden. Dies kann beispielsweise von links nach rechts, im Sichtfeld, von vorne nach hinten oder in der Reihenfolge der Erkennung oder Zuordnung erfolgen.

Es kann vorgesehen sein, dass das erste Objekt, das in einem Segment erkannt wird, einem Bedienelement oder Stellung eines Bedienelements zugeordnet wird, und das nächste Objekt in diesem Segment einem weiteren Bedienelement oder Stellung eines Bedienelements, welches diesem zugeordnet ist, zugeordnet wird. Dies kann solange erfolgen, bis alle Bedienelemente Objekte des Segments zugeordnet sind. Werden danach weitere Objekte im Segment identifiziert, so kann vorgesehen sein, dass diese keinem Bedienelement oder Stellung eines Bedienelements zugeordnet werden. Dabei ist unwesentlich, ob das Objekt im Moment der ersten Erkennung im Segment angeordnet ist oder schon in vorherigen Aufnahmen erkannt wurde und durch die Verfolgung durch die Bewegung des Objekts in das Segment betritt.

Besonders vorteilhaft ist, wenn diese automatische Zuordnung zumindest zweier Objekte zu je einem Bedienelement oder Stellung eines Bedienelements aufrecht erhalten wird, wenn sich zumindest ein Objekt in ein anderes Segment bewegt, dem es nicht zugeordnet ist. Mit anderen Worten kann in einem ersten oder initiierenden Schritt die beschriebene Zuordnung der Objekte zu dem Bedienelement oder der Stellung des Bedienelements erfolgen und diese dann in weiterer Folge beibehalten werden. Diese Zuordnung kann durch ein bestimmtes Ereignis, wie beispielsweise das Betätigen eines Set-Bedienelements, das Aus- und wieder Einschalten der Kamera, das Verlassen des Objekts des Sichtbereichs, vorzugsweise über eine bestimmte Minimalzeit, oder das Identifizieren neuer Objekte erfolgen. Diese Zuordnung kann aber auch erfolgen, wenn das Objekt selbst in einem gewissen Sektor erscheint, oder in einem gewissen Teilbereich des Sektors identifiziert wird. So wird verhindert, dass die Zuordnung während des Aufnehmens durch die Bewegung der Objekte im Sichtfeld verändert wird. Denn nach dem ersten Schritt der automatischen Zuordnung ist dem Benutzer - dem bekannt ist oder auch angezeigt werden kann, wo die Segmente gesetzt sind - klar, welches Objekt welchem Bedienelement zugeordnet ist und möchte diese Zuordnung unter Umständen auch beibehalten, unabhängig von der momentanen Position der Objekte im Sichtfeld.

Die Bedienelemente können unterschiedlich ausgeführt sein, wesentlich ist, dass sie zumindest zwei definierte Positionen besitzen, die sie einnehmen können, beispielsweise wie Knöpfe oder Tasten. In diesem Sinne ist es vorteilhaft, wenn zumindest ein Bedienelement ein Knopf, Drehknopf, Joystick oder ein Schieberegler mit zumindest zwei Stellungen ist. Mit Schieberegler ist ein Bedienelement gemeint, dass durch Verschieben oder Verdrehen entlang zumindest einer Richtung in zumindest zwei definierte Stellungen gebracht werden kann. Damit kann durch sein Bewegen von einer Stellung in die andere ein Übergang der Fokussierung geregelt werden, vorzugsweise durch den Benutzer. Dabei ist vorzugsweise die Geschwindigkeit des Übergangs der Fokussierung von der Bewegungs-geschwindigkeit des Schiebereglers abhängig.

Die Bedienelemente können auch Teil eines grafischen User Interfaces sein, so können die Knöpfe, der Schiebe- oder Drehregler, ein Joystick, etc. auf einem Bildschirm aufgezeichnete Elemente sein, welche beispielsweise über Touchscreen, Maus oder ähnlichen Steuerelementen bewegt oder ausgelöst werden.

Wenn die Segmente verschiedenen Stellungen eines Bedienelements zugeordnet sind, so ist vorteilhaft, wenn durch das Bewegen des Bedienelements in Richtung zumindest einer Stellung die Fokusebene im Raum in Richtung des Objekts verschoben wird, welches der Stellung zugeordnet ist. Wenn die Segmente verschiedenen Bedienelementen zugeordnet werden, so ist vorteilhaft, wenn sich bei Betätigen eines Bedienelements automatisch auf die Ebene des diesen Bedienelements zugeordneten Objekts verschiebt.

Vorzugsweise erfolgt die Erkennung der Objekte automatisch. Damit ist gemeint, dass eine Recheneinheit der Kamera, des Kamerasystems oder des 3D-Sensors die Objekte erkennt, ohne, dass der Benutzer die Objekte einzeln im Sichtfeld markieren und damit definieren muss.

Dabei kann für ein oder mehrere Segmente eine bestimmte Art von Objekt voreinstellbar sein. Beispielsweise kann vorgesehen sein, dass der Benutzer für jedes Segment einstellen kann, ob ein auftretendes Objekte ein Gesicht, ein PKW und/oder eine Flasche sein kann.

In diesem Sinne kann vorgesehen sein, dass die Objekterkennung eine Merkmalsanalyse umfasst, bei der visuelle Merkmale eines Objekts in einem Bereich gesucht, analysiert und identifiziert werden und das Objekt anhand dieser Merkmale erkannt und deren Bewegung verfolgt werden. Mit anderen Worten wird ein Merkmalstracking durchgeführt, das heißt Merkmale eines bestimmten Typs werden im Sichtfeld oder Teil des Sichtfeldes gesucht und ein Objekt wird anhand dieser Merkmale erkannt. Diese Merkmale sind visuelle Merkmale im Bild und können beispielsweise bestimmte Farben, Kanten, Konturen, Texturen, Kontraste, oder charakteristische Form- und Farbkombinationen wie ein Gesicht oder Augen sein. Anhand dieser Merkmale oder der Kombination von solchen Merkmalen, unter Umständen auch abhängig von ihren jeweiligen Positionen (beispielsweise eine definierte Entfernung zwischen zwei Augen und einer Nase zur Erkennung eines Gesichts) kann ein Objekt erkannt und vom übrigen Bild unterschieden, sowie verfolgt werden. Dabei kann der Bereich das Segment, ein anderer Teil des Sichtfeldes oder das gesamte Sichtfeld sein.

Weiter kann vorteilhaft sein, wenn die Objekterkennung die Erkennung über einen Deep-Learning-Algorithmus umfasst. Dabei ist mit Deep-Learning -Algorithmus eine Verarbeitung von aufgenommenen Bilddaten durch ein vielschichtiges, neuronales Netzwerk gemeint, welches vorab durch eine Vielzahl von Beispieldatensätzen trainiert wurde. Beispielsweise kann der Deep-Learning-Algorithmus durch Einspielung sehr vieler Bilder von Personen oder einer bestimmten Person aus unterschiedlichen Perspektiven, mit unterschiedlicher Mimik, unterschiedlicher Belichtung und dergleichen trainiert werden, um Personen oder genau diese bestimmte Person zu erkennen. Diese gelernten Objekte liegen in Netzwerken vor und dienen dem Algorithmus zur Identifizierung von Objekten in den Bildern. Durch Verarbeitung aufgenommener Daten können so Merkmale und/oder auch direkt Objekte erkannt werden.

Sehr vorteilhaft ist, wenn auf bereits trainierte Datensätze bzw. Netzwerke zurückgegriffen werden kann. So liegen trainierte Datensätze für den menschlichen Körper, das Gesicht, oder die Gliedmaßen (beispielsweise im Skeleton Tracking Verfahren) vor. D.h. mit Hilfe vorhandener Deep Learning Algorithmen lassen sich sehr zuverlässig und robust Personen aber auch Gegenstände automatisiert in einem Bild erkennen und weiter verfolgen.

Weiter kann vorgesehen sein, dass zumindest ein Objekt durch den Benutzer markiert wird, der Algorithmus einer Recheneinheit der Kamera, des Kamerasystems oder des 3D Sensors die Merkmale dieses Objekts erkennt und dieses anhand seiner Merkmale verfolgt wird. Von Bild zu Bild ändern sich die Merkmale auch bei einer Bewegung des Objekts nur wenig und sie können so im nachfolgenden Bild identifiziert werden. Durch eine derartige Feature Detection kann ein Objekt einfach definiert und verfolgt werden. Dies ist insbesondere bei Objekten sinnvoll, welche nicht üblicherweise verfolgt werden oder die durch einen Deep-Learning - Algorithmus oder ein Merkmalstracking schwierig oder nur schlecht erkannt werden.

Die beschriebenen Objekterkennungs- und Verfolgungsmethoden können natürlich auch in beliebigen Kombinationen verwendet werden, um so deren Nachteile und/oder Ungenauigkeiten zu reduzieren.

In der Regel wird bei Kameras ein zweidimensionales Sichtfeld aufgenommen, wobei eine x-Achse und eine y-Achse das zweidimensionale Sichtfeld aufspannen.

Besonders vorteilhaft ist, wenn Tiefendaten zumindest in einem Teil des Sichtfeldes der Kamera erfasst werden und zumindest einem Teil der Bildbestandteile des Sichtfelds diesen Tiefendaten zugeordnet werden und vor der Zuordnung vorzugsweise eine weitere Kamera ein Realbild aufnimmt und zumindest einem Teil der Bildbestandteile des Realbilds den Tiefendaten zugeordnet werden. Dabei sind mit Tiefendaten Entfernungsdaten von einzelnen Bildpunkten oder Bildbestandteilen zur Kamera gemeint. Mit anderen Worten sind dies Entfernungsdaten entlang einer z-Achse, welche normal zu einer x-Achse und y-Achse aufgespannten Ebene steht. Dabei kann jedem Bildteil, beispielsweise jedem Pixel, Tiefendaten zugeordnet werden. Durch die Zuordnung von Tiefendaten steht mehr Information über das Bild zur Verfügung, wodurch die Verarbeitung des Bildes erleichtert werden kann. Beispielsweise ist besonders vorteilhaft, wenn Tiefendaten der Objekte zur Einstellung des Fokus herangezogen werden. Damit kann die Fokussierung verschnellert und verbessert werden.

Zusätzlich vorteilhaft ist, wenn die Tiefendaten der Objekte permanent erfasst werden. Damit kann ein automatisiertes und schnelles Umfokussieren von einem Objekt zu anderen stattfinden, da beide Distanzen permanent bekannt sind und nicht erst während dem Fokusvorgang ermittelt werden müssen (so wie es sonst in der Regel der Fall ist). Durch die Bewegung des Bedienelements wird vorzugsweise die Dauer des Fokussiervorgangs festgelegt. So erfolgt eine gleichmäßige Fokusrampe im Raum.

Besonders vorteilhaft ist, wenn die Segmente zumindest teilweise nicht nur durch Seitenränder, sondern auch durch Tiefenränder begrenzt werden. Dadurch werden die Segmente dreidimensional abgegrenzt. Damit können Segmente auch entlang der z-Achse hintereinander angeordnet werden. Dies ermöglicht eine noch bessere Segmentierung und mehr Gestaltungsfreiheit bei der Fokussierung für den Benutzer. Mit Seitenränder sind damit Ränder zweidimensionalen Sichtfeldes gemeint, das heißt Ränder, die sich zwischen der x-Achse und y-Achse aufspannen.

Weiters kann vorgesehen sein, dass die Erfassung der Tiefendaten zumindest teilweise über zumindest einen 3D Sensor erfolgt, der vorzugsweise an der Kamera angebracht ist.

Eine Berechnungseinheit kann mit einem 3DSensor eine Matrix von Entfernungswerten erzeugen. Der 3D Sensor kann beispielsweise aus einer stereoskopen Kameraanordnung, TOF Kamera, Laserscanner, Lidar Sensor, Radarsensor oder Kombination verschiedener 3D Sensoren zur Verbesserung der Messqualität, des Messbereichs und der Auflösung bestehen.

Vorzugsweise ist vorgesehen, dass eine weitere Kamera ein Realbild aufnimmt und zumindest einem Teil der Bildbestandteile des Sichtfelds den Tiefendaten zugeordnet werden. Es wird also zumindest einem Teil der Bildpunkten des Realbildes zumindest einem Teil der jeweiligen Tiefendaten zugeordnet, womit die Entfernung dieses Bildpunktes zur Kamera bekannt ist. Dazu hat der 3D Sensor vorzugsweise zusätzlich eine weitere Kamera, welche ein Realbild erzeugt und die hier daher als Realbildkamera bezeichnet wird. Der 3D Sensor und die Realbildkamera sind vorzugsweise zueinander mechanisch fixiert und kalibriert. Die Darstellungsperspektiven sind vorzugsweise gleich. Somit kann jedem erkennbaren Bildpunkt der Realbildkamera ein Entfernungswert zugeordnet werden. Diese Zuordnung nennt man Tiefenbild. Vorzugsweise hat diese Realbildkamera einen unendlich großen Schärfentiefenbereich, um alle Objekte im Bild scharf abbilden zu können. Vorzugsweise hat diese Realbildkamera einen großen Belichtungsumfang (z.B. durch einen HDR-Modus), um unterschiedlich helle Motive gleichmäßig abbilden zu können. Alternativ kann auch das Bild der Kamera zur Erstellung des Tiefenbildes herangezogen werden, mit anderen Worten kann die Kamera die weitere Kamera darstellen.

Vorteilhaft ist, wenn die Erfassung der Tiefendaten die Triangulation von Daten von zumindest zwei Hilfskameras umfasst. Dabei kann auch die Kamera selbst eine der Hilfskameras darstellen. Die Hilfskameras sind vorzugsweise in einem definierten Abstand angeordnet und stehen in einem definierten Winkel zueinander, damit eine Triangulation einfach möglich ist.

In einer bevorzugten Ausrichtung ist die optische Achse des 3D Sensors parallel zur optischen Achse der Kamera angeordnet, um eine orthogonale Messung der Tiefendaten zur optischen Achse der Kamera zu erreichen.

Besonders vorteilhaft ist auch, wenn das Tiefenbild des 3D Sensors in das Bild der Kamera zumindest teilweise eingerechnet wird. D.h. dass die Perspektiven der Abbildungen ineinander übergeführt werden können.

Die räumliche Zuordnung eines Teils des Sichtfeldes der Kamera kann aber auch durch Positionssensoren erfolgend, welche am Motiv befestigt sind. Solche Positionssensoren können beispielsweise Mikrowellen-, Radar oder Schallsensoren oder Transponder sein, welche anhand verschiedener physikalischer Methoden, wie eine Laufzeitmessung, Phasenmessung oder Feldstärkemessung eine Abstands- aber auch einen Winkelbestimmung in Bezug zu einer Basisstation ermöglichen. Ist die Basisstation an der Filmkamera angebracht, ist es mit solchen Sensoren möglich eine räumliche Bestimmung des Motivs im Raum zu treffen.

Mit all diesen Methoden kann die Entfernung zwischen Kamera und einem Teil des Sichtfeldes ermittelt werden und so jedem Teil des Sichtfeldes eine Entfernung zugeordnet werden.

Will man in einem Videobild ein Objekt visuell tracken, so ist man damit konfrontiert, dass das Objekt oft aus dem Sichtfeld der Kamera verschwinden kann. Einfache Tracking Algorithmen, wie Augen, Gesichtsfeld- oder Personentracking, haben oftmals folgende Nachteile:
- Das zu trackende Objekt wird durch ein anderes Motiv oder durch andere Objekte teilweise oder komplett für eine kurze Zeit oder länger abgedeckt
- Das zu trackende Objekt verlässt den Sichtbereich der Kamera und kommt nach kurzer oder längerer Zeitdauer wieder ins Blickfeld.
- Das zu trackende Objekt dreht sich, oder die Filmkamera bewegt sich um das Objekt herum, wobei sich die Merkmale des Objekts sehr stark verändern. Augen oder das Gesicht oder die bestimmten Merkmale sind beispielsweise nicht mehr im Bild zu erkennen. Hier kann der Tracking-Algorithmus sein Zielobjekt verlieren.
- Ein Merkmal eines Objekts wird abgedeckt, oder ist im Realbild nicht mehr zu sehen. Gibt es im Sichtbereich der Kamera ein weiteres Objekt mit gleichen oder sehr ähnlichen Merkmalen, so darf der Tracking Algorithmus nicht auf das ähnliche Objekt springen. Hier ist zu verhindern, dass der Tracking Algorithmus auf ein Motiv mit vergleichbaren Merkmalen umspringt, wenn die Merkmale des ursprünglichen Objekt nicht mehr ersichtlich sind.

Generell ergeben sich folgende Nachteile, wenn das Realbild der Filmkamera selbst zum Tracken eines Bildbereiches herangezogen würde:
- Filmobjektive verfügen über einen kleinen Schärfetiefenbereich. Sie bilden erwünschte Bereiche im Bild auch sehr unscharf ab. Sind Bildbereiche aber unscharf abgebildet, so kann in diesen Bereichen nicht getrackt werden, weil Objekte im Videobild nicht erkannt und analysiert werden können. Möchte man die Fokusebene von einem Bereich A zu einem Bereich B verschieben, so ist dies ev. nicht möglich, da der Bereich B nicht erkannt wird, weil er im Realbild der Filmkamera unscharf abgebildet ist. Eine Objektauswahl im Realbild der Filmkamera kann problematisch bis unmöglich sein.
- Manche Bereiche im Realbild der Filmkamera sind so belichtet, dass in diesen Bereichen keine Bildanalyse stattfinden kann.

Es ist also besonders vorteilhaft, wenn ein Tracking Algorithmus für bewegte Objekt vor der Kamera gegenüber unterschiedlichen Störungen sehr robust aufgebaut ist.

Die Erfindung betrifft auch ein Verfahren zum Tracken von Objekten bei Video- oder Filmkameras. Das Hauptmerkmal ist eine Unterstützung oder Fusion von unterschiedlichen Tracking-Algorithmen, im speziellen die Einbeziehung von Tiefendaten.

Der Trackingvorgang besteht erfindungsgemäß aus folgenden Schritten:
- Bilderfassung:
   In einem 3D Sensor wird ein Realbild und ein Tiefenbild generiert.
- Transformation/Rektifizierung:
   Werden Realbild und Tiefenbild von 2 unterschiedlichen Sensoren oder von der Kamera selbst erzeugt, so sind sie in Übereinstimmung zu bringen. D.h. einem Pixel des Realbildes soll der korrespondierende Tiefenwert zugeordnet werden. Dies erfolgt durch Bildtransformation und Rektifizierung anhand der Parameter der Sensoren, der Optik und der geometrischen Anordnung zueinander.
- Segmentierung
   Aus dem Tiefenbild können zusammenhängende Bereiche extrahiert werden. Einzelne Objekte/Motive im Raum werden anhand ihres gemeinsamem (ähnlichen Abstands) als Segment zusammengefasst. Ebenen (wie Fußboden oder Wände) können zu Segmenten zusammengefasst werden. Dadurch können interessante Motive von uninteressanten Motiven eingegrenzt werden.
- Prädiktion
   Es erfolgt eine rechnerische Vorhersage der Bewegungsinformation anhand der vorhergehenden Bilder und anhand der physikalischen Gesetzmäßigkeiten der zu trackenden Objekte (Objekte können sich nur durch eine Geschwindigkeit von vmax in Relation zur Videokamera bewegen)
   Aus der Prädiktion ergibt sich ein möglicher Distanzbereich L_{XYZ}(n), in welcher sich das Objekt befinden kann. Bei sehr kurzen Abtastinterfallen ist der Distanzbereich sehr klein und die Vorhersagegenauigkeit, wo sich das Objekt befindet sehr hoch.
- Regionsbestimmung
   Aus der Prädiktion der Distanz können alle Bildbereiche des Realbildes ausgeschlossen werden, welche außerhalb des Distanzbereichs L_{XYZ}(n) liegen. D.h. im Realbild können alle Bildbereiche ausgeblendet werden, welche bestimmt nicht im Bereich der Prädiktion liegen.
   Aus der Segmentierung des Tiefenbildes können Regionen aus dem Realbild herausgelöst werden, worauf sich der Tracker festlegen kann. Beispielsweise Fußböden, Wände oder der Hintergrund können im Bildbereich ausgeblendet werden. Dadurch können die interessanten Bereiche des Realbildes wieder eingeschränkt werden.
   Mit beiden Maßnahmen wird der Bildbereich des Realbildes sehr eingeschränkt, wo das Objekt zu suchen ist. Der Tracking Algorithmus wird durch die Prädiktion und Segmentierung durch das Tiefenbild sehr robust.
   Die Transformation/Rektifizierung (Maßstabsgenaue, entzerrte und korrekt ausgerichtete Abbildung) des Tiefenbildes in das Realbild ist Bedingung dieser Regionsbestimmung.
- Objektverfolgung/Tracking
   Das so vorverarbeitete Bild der Kamera kann jetzt der Objektverfolgung zugeführt werden. Mögliche Tracking Algorithmen sind beispielsweise Deep Learning Algorithmus oder ein Feature Detection.
   Es kann nach unterschiedlichen Merkmalen, wie Person, Gliedmaßen (Skeletton), Gesicht, - Kopf/Schulter-, Augen getrackt werden.

Besonders vorteilhaft ist auch, wenn zumindest ein Teil der Tiefendaten zur Erkennung und Verfolgung zumindest eines Objekts herangezogen werden. Kann die Unterscheidung von Objekten und/oder deren Abgrenzung von der Umgebung verbessert werden. Dies beschleunigt die Objekterkennung und vermindert die Fehlerrate und führt dadurch zu einer besseren Benutzbarkeit. Insbesondere bei der Verfolgung können diese Tiefendaten vorteilhaft sein, beispielsweise, wenn ein Objekt vorübergehend das Sichtfeld verlässt.

Mit visueller Erkennung und Verfolgung ist dabei gemeint, dass die Erkennung und Verfolgung zumindest teilweise auf Basis visueller, also auf Basis von Bilddaten erfolgt. Die Tiefendaten können dabei unterstützend als Zusatzinformationen miteinbezogen werden.

Es kann vorgesehen sein, dass die Tiefendaten zumindest teilweise von einem 3D Sensor an der Kamera erfasst werden. Damit wird auf einfache Weise eine Aufzeichnung der Tiefendaten erreicht. Die Aufzeichnung im Bereich der Kamera ist besonders vorteilhaft, da somit die Verknüpfung der Tiefendaten mit den Bilddaten der Kamera erleichtert ist. Vorzugsweise wird dazu der 3D Sensor in eine definierte Stellung und Entfernung zur Kamera gebracht.

Weiters ist vorteilhaft, wenn in dem Sichtfeld der Kamera zumindest ein Segment definiert wird und auf ein erkanntes und verfolgtes Objekt fokussiert wird, sobald es sich im Segment befindet. Damit wird automatisch der Fokus auf ein Objekt gesetzt, das mit hoher Wahrscheinlichkeit wichtig ist. Dabei kann vorgesehen sein, dass nur auf ein festgelegtes, erkanntes und verfolgtes Objekt oder Objekt einer festgelegten Objektklasse fokussiert wird, sobald es sich im Segment befindet.

In einer bevorzugten Ausführungsform ist vorgesehen, dass zumindest einem Objekt ein maximaler Bewegungsspielraum pro Zeiteinheit zugeordnet wird und dieser Bewegungsspielraum in die Objekterkennung und Objektverfolgung mit einbezogen wird. Damit können Objekte besser und robuster verfolgt werden und auch wiedererkannt werden, wenn sie vorübergehend verdeckt sind. Physikalisch ist es unmöglich, dass Objekte bei einer Bewegung plötzlich in einem anderen Sektor auftreten, da sie einer maximalen Geschwindigkeit oder Beschleunigung unterliegen. Wird also ein Objekt beim Tracking im Videobild durch ein anderes Objekt abgedeckt, und ist dieses abdeckende Objekt dem ursprünglichen Objekt ähnlich, so kann es passieren, dass der Trackingalgorithmus auf das neue Objekt springt. Physikalisch kann so ein Sprung aber meist nicht möglich sein, wenn die Positionssprung über einer maximal möglichen Beschleunigung des Bewegungsvektors im Raum liegt.

Durch den maximalen Bewegungsspielraum pro Zeit, also zum Beispiel den maximalen Bewegungsspielraum pro Einzelaufnahme, kann das Objekt leichter im Sichtfeld von Aufnahme zu Aufnahme gefunden werden, da der Bewegungsspielraum den Bereich, in dem sich das Objekt befinden kann, eingeschränkt wird. Dabei muss dieser Spielraum aber keine absolute Bedingung sein, sondern kann als gewichteter Einzelaspekt unter mehreren Aspekten (wie ein Merkmalstracking) zur Identifikation und Verfolgung des Objekts dienen. Mit anderen Worten wird das Tracking durch die räumliche Segmentierung in x,y und/oder z-Richtung durch einen maximal möglichen Bewegungsspielraum stabilisiert. Der primäre Tracking Algorithmus wird also durch eine räumliche Komponente gestützt.

Es kann auch vorgesehen sein, das die Geschwindigkeit, Bewegungsrichtung und/oder Beschleunigung eines Objekts gemessen wird und zur Objektverfolgung mit einbezogen wird. Damit kann beispielsweise ein Objekt, das sich mit bekannter Geschwindigkeit im Sichtfeld bewegt und vorübergehend hinter einem Hindernis verschwindet leichter nach dem Hervortreten auf der anderen Seite des Hindernisses wiedererkannt werden. Dabei ist es besonders vorteilhaft, wenn die ursprüngliche Zuordnung zum Bedienelement oder Stellung des Bedienelements beibehalten wird.

Mit dem Einbringen eines Bewegungsspielraums und der räumlichen Unterteilung des Sichtbereiches der Kamera in Segmenten, ist es möglich in gewisser Weise Objekte, welche den Sichtbereich verlassen, durch die räumliche Zuordnung der Objekte bei Wiedereintritt wieder automatisch zu erfassen und weiter zu verfolgen, solange sie innerhalb des Bewegungsspielraumes wieder in das Bild kommen.

Weiters ist vorteilhaft, wenn zumindest ein Objekt einer Objektklasse zugeordnet wird und der Bewegungsspielraum abhängig von der Objektklasse gewählt wird. Der Bewegungsspielraum kann von der Art des Objekts abhängig sein oder individuell für den Benutzer einstellbar sein. Dabei können für verschiedene Objektklassen verschiedene Merkmale in einer Datenbank hinterlegt sein, nach welchen vorzugsweise gesucht wird.

In der Folge wird die vorliegende Erfindung anhand einer in den Figuren dargestellten nicht einschränkenden Ausführungsvariante näher erläutert. Es zeigen:
- Figur 1.1 und 1.2: das erfindungsgemäße Verfahren und eine Vorrichtung, die das erfindungsgemäße Verfahren verwendet, in einer ersten Ausführungsform in schematischen Ansichten;
- Figur 2.1: das das erfindungsgemäße Verfahren und eine Vorrichtung, die das erfindungsgemäße Verfahren verwendet in einer zweiten Ausführungsform in einer schematischen Ansicht;
- Fig. 2.2: das Sichtfeld der zweiten Ausführungsform;
- Fig. 2.3: das Sichtfeld der zweiten Ausführungsform während der Bewegung eines Objekts.
- Fig. 3: ein Blockdiagramm eines Verfolgungsprozesses in einer erfindungsgemäßen Ausführungsform zur Fokussierung einer Kamera;
- Fig. 4: ein Blockdiagramm eines Verfolgungsprozesses in einer erfindungsgemäßen alternativen Ausführungsform zur Fokussierung einer Kamera.

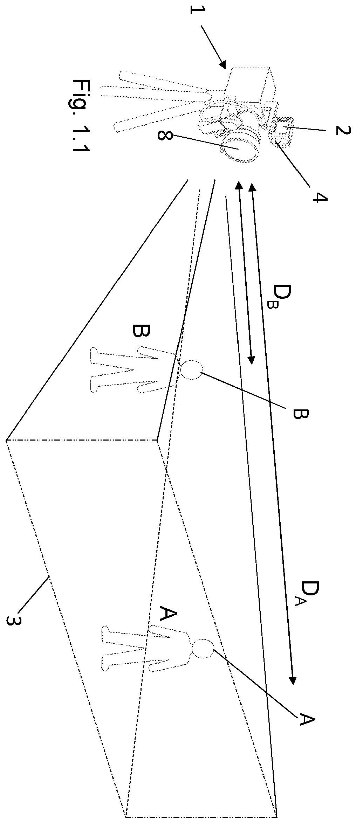

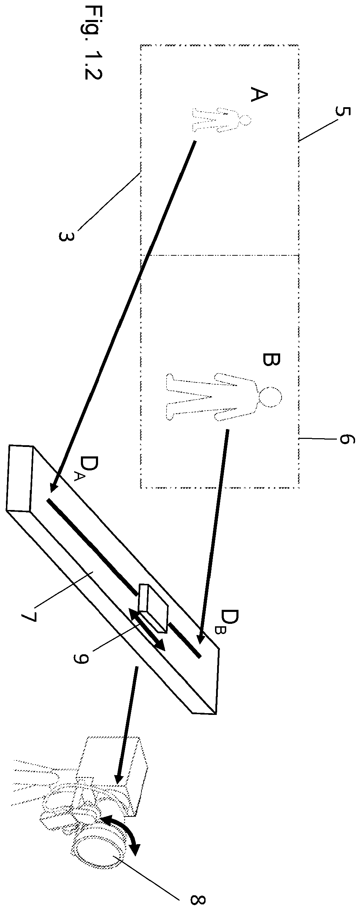

In Fig 1.1 und 1.2 wird das Verfahren an einer ersten Ausführungsform praktisch näher erläutert.

2 Personen A und B stehen im Sichtbereich 3 der Kamera 1. Diese Personen stellen Objekte dar, die zu verfolgen, also zu tracken sind. An der Kamera 1 ist ein 3D Sensor 2 angebracht. Im 3D Sensor 2 befindet sich eine als Realbildkamera 4 ausgeführte weitere Kamera 4. Im Videobild dieser Realbildkamera 4 können in einer vorhandenen Recheneinheit die Personen mit Hilfe bekannter Tracking Algorithmen (beispielsweise eines Deep Learning Algorithmus, Skeleton Tracking,...) automatisch getrackt werden, sobald der Prozess vom Benutzer gestartet wird.

Das Sichtfeld 3 der Kamera 1 kann beispielsweise in 2 Segmente - ein linkes Segment 5 und ein rechtes Segment 6 - unterteilt werden. Damit kann Person A dem linken Segment 5 und Person B dem rechten Segment 6 zugeordnet werden. Da das Realbild des 3D Sensors 2 mit Tiefenwerten hinterlegt ist, d.h. für jeden Bildbereich oder Pixel des Realbildes ist auch eine Tiefeninformation vorhanden, kann aus den Tracking Punkten durch den 3D Sensor 2 die Distanz der Personen bestimmt werden. Dazu wird die Person als gemeinsames Objekt zusammengefasst. Dies ist durch Distanz D_{A} für Person A und Distanz D_{B} für Person B dargestellt. Person A ist weiter hinten und damit kleiner eingezeichnet. Das linke Segment 5 wird einer ersten Stellung eines Bedienelements und das rechte Segment 6 einer zweiten Stellung des Bedienelements zugeordnet. In dieser Ausführung ist das Bedienelement ein Schieberegler und die erste Stellung der linke, sowie die zweite Stellung der rechte Anschlag. Die korrespondierende Distanz D_{A} wird dem linken Anschlag eines Schiebereglers 7 zugeordnet, da Person A im linken Segment vor der Kamera steht. Die Distanz D_{B} wird dem rechten Anschlag des Schiebereglers zugeordnet. Aus den Distanzen kann in einer Objektivsteuereinheit die entsprechende Position am Fokusobjektiv 8 berechnet und eingestellt werden. Das Fokusobjektiv 8 wird auf die entsprechende Position bewegt und fokussiert. Durch die Distanz D_{A} wird Objekt A fokussiert, durch Distanz D_{B} wird Objekt B fokussiert. Wird der Schieberegler 7 jetzt vom linken Anschlag, welcher dem Objekt A entspricht, zum rechten Anschlag bewegt (Pfeil 9), so wandert die Fokusebene von Objekt A zu Objekt B im Raum. Die Bewegung des Schiebereglers entspricht also einer Fokusrampe, d.h. wie schnell der Fokus von Objekt A zu Objekt B wandern soll. Bewegen sich die Objekte A, B im Raum, so folgen ihnen die Trackingpunkte automatisch, damit auch die Distanzen und es kann am Schieberegler nach wie vor der Fokus von Objekt A zu Objekt B verschoben werden, ohne das der Benutzer die Distanzen zu den Objekten neu bestimmen müsste. Mit diesem Verfahren kann der Benutzer das Timing und die Zeitdauer der Fokusverschiebung sehr einfach und intuitiv durchführen, da er nur ein Bedienelement 7 bewegen muss, und sich nicht auf die Objekte selbst konzentrieren muss.

Der Sichtbereich 3 der Kamera 1 könnte auch in ein vorderes und hinteres Segment unterteilt werden, und so Objekt A bzw. Objekt B automatisch einem Anschlag eines Schiebereglers zugewiesen werden. Wurde die Zuweisung durchgeführt, so bleibt sie auch aufrecht, auch wenn sich die Objekte bewegen.

Es ist auch möglich eine maximale Distanz festzulegen, ab welcher keine Objekte mehr getrackt werden. Damit ist möglich nur auf Objekte im Vordergrund zu tracken und alle Objekte im Hintergrund zu ignorieren.

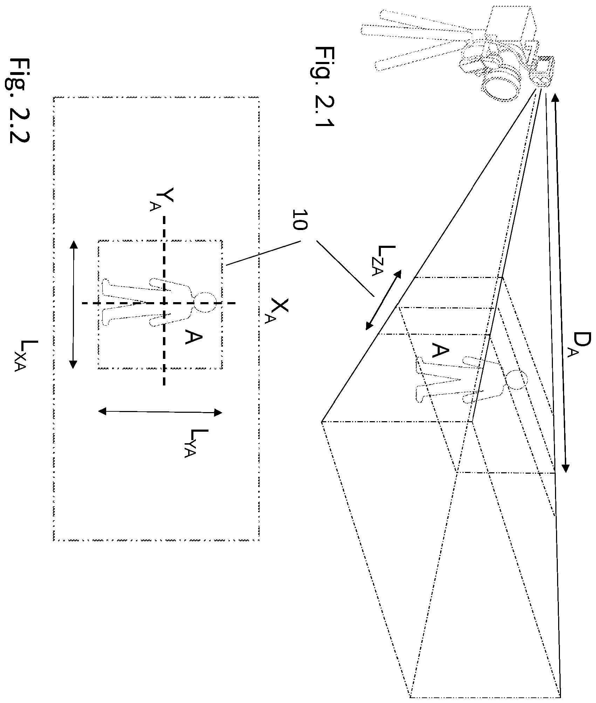

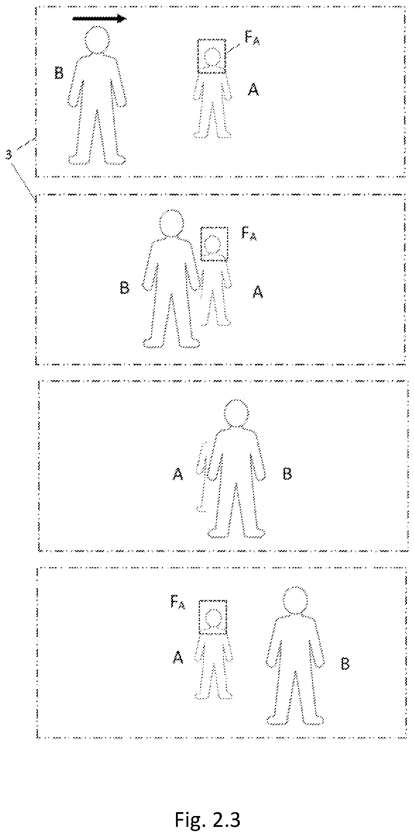

In Fig. 2.1, 2.2 und 2.3 wird das Verfahren in einer zweiten Ausführungsform praktisch erläutert.

Eine Person A, die ein Objekt darstellt, steht im Sichtbereich 3 oder Sichtfeld 3 einer Kamera 1. An der Kamera 1 ist ein 3D Sensor 2 angebracht. Im 3D Sensor 2 befindet sich eine Realbildkamera 4. Im Videobild dieser Realbildkamera 4 kann in einer vorhandenen Recheneinheit die Person mit Hilfe bekannter Tracking Algorithmen (beispielsweise eines Deep Learning Algorithmus, Skeleton Tracking, Gesichts Tracking, Feature Detection,..) automatisch getrackt werden, sobald der Prozess vom Benutzer gestartet wird. Da das Realbild des 3D Sensors 2 mit Tiefenwerten hinterlegt ist, d.h. für jeden Bildbereich oder Pixel des Realbildes ist auf eine Tiefeninformation vorhanden, kann aus den Tracking Punkten durch den 3D Sensor 2 die Distanz der Personen A bestimmt werden. Der Trackingalgorithmus könnte auch am Videobild der Kamera 1 ablaufen, wenn das Bild der Kamera mit Tiefeninformationen hinterlegt wurde. Dabei kann wie beschrieben zuerst das Realbild des 3D Sensors 2 mit den Tiefenwerten hinterlegt werden und danach dieses mit dem Bild der Kamera 1 kombiniert werden, oder die Tiefenwerte direkt mit dem Bild der Kamera 1 hinterlegt werden. Aus der gemessenen Distanz kann in einer Objektivsteuereinheit die entsprechende Position am Fokusobjektiv 8 berechnet werden. Das Fokusobjektiv 8 wird auf die entsprechende Position bewegt und fokussiert. Bewegt sich die Person A im Raum, so folgt ihr automatisch der Trackingpunkt, damit die Distanz und der Fokus wird automatisch auf das bewegte Objekt gelegt.

Aus der Distanz D_{A} der Person A kann jetzt der Tracking Algorithmus robuster aber auch effizienter und schneller gemacht werden. Abhängig ihrer physikalisch möglichen Geschwindigkeit kann sich die Person in einem gewissen Abtastzeitpunkt, welcher bevorzugt die Aufnahmezeit des Videobildes entspricht, nur in einem gewissen Bewegungsspielraum im Raum bewegen. Der Tracking Algorithmus kann dabei das Objekt einer Objektklasse, hier der Klasse "Person" zuordnen und einen maximalen Bewegungsspielraum 10 abhängig von der Klasse abrufen. Die Person A kann sich von einem Bild zum anderen nur mit L_{XA} in x-Richtung und L_{YA} in y-Richtung zum vorhergehenden Bild bewegt haben. Regionen außerhalb dieses Segment sind nicht möglich. Würde der Tracking Algorithmus in einem Fehlerfall eine andere Position in der x/y Ebene des Bildes positionieren, so kann dies ausgeschlossen werden. Die Trackingregion des aktuellen Bildes muss im Segment L_{XA} und L_{YA} liegen.

Als besonders vorteilhaft erweist sich die Erfassung der Tiefe durch den 3D Sensor 2. Die Person A kann sich in z-Richtung nur um L_{ZA} bewegen. Jede Bewegung außerhalb dieses Spielraums ist physikalisch nicht möglich und kann ausgeschlossen werden.

Das Beispiel in Fig. 2.3 zeigt den Vorteil. Die Person A wird durch ein Gesichtstracking erfasst. Das Gesichtstracking ist mit F_{A} gekennzeichnet. Kommt jetzt eine 2. Person ins Bild, so würde auch hier ein Gesichtstracking durchgeführt werden. Diese Trackingposition braucht allerdings nicht berücksichtigt werden, da sie außerhalb der möglichen Region liegt. Ist die Person B näher zur Kamera 1 und bewegt sich durch das Bild, so deckt Person B Person A teilweise oder komplett ab. Ein Gesichtstracking ist bei Abdeckung bei Person A nicht mehr möglich. Auch jetzt springt die Trackingposition nicht auf das Gesicht von Person B, obwohl die Trackingposition von Gesicht B gleich oder ähnlich zur Position von Gesicht A wäre. In räumlicher Richtung würde es sich aber um einen Distanzsprung handeln, welcher nicht möglich ist. Die Stellung des Fokus ändert sich daher nicht. Dies ist in den meisten Fällen auch nicht problematisch, da Person A im Bild abgedeckt und daher nicht ersichtlich ist. Gibt Person B Person A im Bild wieder frei, so ist hier wieder ein Gesichtstracking F_{A} möglich und eine korrespondierende Distanz wird ermittelt. Hat sich in der Zwischenzeit Person A etwas bewegt, so kann der Fokus auf diese Position springen, oder er wird durch eine zeitliche Rampe auf die entsprechende Position verschoben. Durch den 3D Sensor 2 wird auch die Geschwindigkeit der Objekte im Raum ermittelt. Wird Person A abgedeckt, so kann aus ihrer bisherigen Geschwindigkeit auf die zukünftige Position im Raum geschlossen werden und der Fokus auch bei einer Abdeckung weiter verschoben werden.

Sind schon zum Startpunkt Person A und Person B im Sichtbereich 3, so kann der Benutzer durch einen einfachen Knopfdruck die getrackten Gesichts-Positionen abwechselnd anspringen und so die Startposition auf das Gesicht F_{A} festlegen.

Es ist auch möglich eine maximale Distanz festzulegen, ab welcher keine Personen oder Objekte mehr getrackt werden. Damit ist möglich nur auf Objekte im Vordergrund zu tracken und alle Objekte im Hintergrund zu ignorieren.

Durch das vorhandene Tiefenbild ist es möglich, alle Bereiche im Bild einzuschwärzen (auszublenden), welche nicht im festgelegten Limit liegen. Die Regionen, wo der Tracking Algorithmus das Ziel im Bild suchen muss, kann dadurch stark eingeschränkt werden. Er wird dadurch robuster und effizienter.

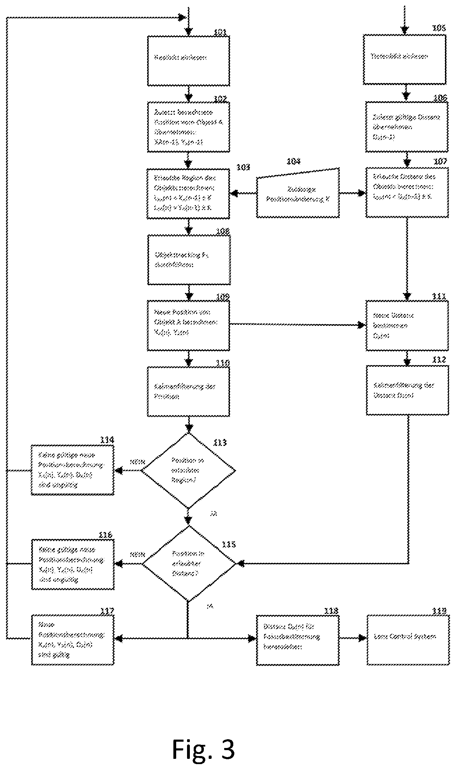

In Fig. 3 wird ein Blockdiagramm eines Ausschnitts einer möglichen Objektverfolgung gezeigt. Dieses stellt eine Verarbeitungsmöglichkeit in einer Verarbeitungslogik zur Verfolgung von Objekten dar.

Um den Tracking Algorithmus mit Tiefendaten robuster zu gestalten, gibt es 2 Möglichkeiten: Die Prädiktion und die Regionsbestimmung.

Fig. 3 zeigt im Flussdiagramm den Vorgang durch eine Regionsbestimmung.

Dabei wird in einem ersten Schritt ein Bild der Kamera 4 eingelesen (101). Es kann sich auch um das Bild der Kamera 1 handeln, wenn die Kamera mit dem 3D-Sensor zueinander kalibriert ist, d.h. die Tiefendaten des 3D-Sensors 2 können mit den Bildbereichen der Kamera 1 perspektivengenau in Übereinstimmung gebracht werden. Im nächsten Schritt wird die zuletzt gültig berechnete Position des getracktem Objekts A übernommen (102). In dieses Bild (101) wird die zuletzt vom Tracking Algorithmus (108) berechnete Position des Objekts A übernommen. Mit Hilfe der zulässigen Positionsänderung K (104) pro Abtastintervall kann die Region berechnet werden, in welcher die neue Position des Objekts erlaubt ist (103). Die zulässige Positionsänderung kann je nach Objekt fix festgelegt werden, oder kann vom Benutzer vor dem Startpunkt eingegeben oder im laufenden Prozess verändert werden. Ebenso wird das Tiefenbild (105) vom 3D-Sensor 2 eingelesen. Die zuletzt gültige Distanz wird übernommen (106). Aus der zulässigen Positionsänderung K (104) kann die Region berechnet werden, in welcher sich die neue Distanz des Objekts befinden darf (107).

Nach dieser Vorbereitung wird im Realbild ein neuer Trackingvorgang gestartet (108). Es kann ein beliebiger Algorithmus sein. In dem Beispiel wird nach einem Gesicht einer Person gesucht. Ein Gesichtstracking F_{A} wird durchgeführt. Der Trackingalgorithmus liefert eine neue Position X(n), Y(n) entlang der x- und y-Achse des Bildes (109). Mit einer nachträglichen Kalman-Filterung wird die Position stabilisiert (110). Im nächsten Schritt wird überprüft, ob die neue Position im Bereich L_{XA}(n) und L_{YA}(n) liegt, welche die Grenzen der erlaubten Region angeben (113). Ist die neue Position (n) außerhalb der Grenzen, so hat keine gültige Positionsbestimmung stattgefunden (114). D.h. es wurde ein Objekt im Bild gefunden, welches nicht das vorhergehende Objekt sein kann, weil die Positionsänderung über der physikalisch festgelegten Änderungsrate K gelegen ist. Die Positionsbestimmung wird verworfen. Die letztgültige Position (n-1) bleibt aufrecht.

Ebenso wird mit Hilfe der neuen Position (n) (109) im Tiefenbild eine neue Distanz bestimmt (111). Auch diese Distanz wird mit einer nachfolgenden Kalman-Filterung stabilisiert (112). Wieder wird überprüft, ob die neu berechnete Distanz innerhalb der möglichen Grenzen L_{DA}(n) liegt (115). Ist die Distanzänderung größer, als dies erlaubt wäre, so wird die neue Positionsbestimmung wieder verworfen (116). Die letztgültige Position (n-1) bleibt aufrecht. Nur wenn die Position in der möglichen Region ist (113) und in der erlaubten Distanz (115) hat ein gültiges Tracking stattgefunden und diese neue Position und die neue Distanz werden dem Algorithmus für einen weiteren Berechnungsschritt zur Verfügung gestellt (117). Die neue gültige Distanz D_{A}(n) wird für die Fokusverstellung herangezogen (118) und dem Lens Control System (119) übermittelt.

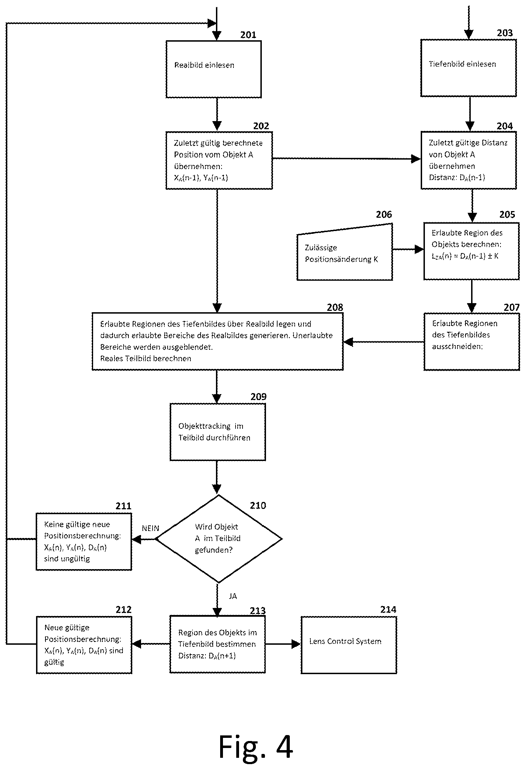

Das Tracking eines Objekts kann auch dadurch robuster gemacht werden, wenn durch eine Segmentierung oder regionale Einschränkung des Realbildes der Suchbereich eines Tracking Algorithmus verkleinert wird. Segmente oder Regionen, wo nicht gesucht werden darf, weil sie physikalisch unmöglich sind (weil sie außerhalb des möglichen Bewegungsspielraums des Objekts liegen), können den Algorithmus beschleunigen, effizienter und robuster gestalten. Fig. 4 zeigt den schematischen Aufbau des Algorithmus.

Im ersten Schritt wird das Realbild einer Kamera 1 oder des 3D Sensor 2 eingelesen (201). Im nächsten Schritt wird die zuletzt gültig berechnete Position X_{A}(n-1), Y_{A}(n-1) des getrackten Objekts A übernommen (202). Zusätzlich wird das Tiefenbild aus dem 3D Sensor ausgelesen (203) und die zuletzt gültige Distanz D_{A}(n-1) übernommen (204). Mit Hilfe der zulässigen Positionsänderung K pro Abtastintervall (206) kann der Distanzbereich L_{ZA}(n) = D_{A}(n-1) ± K berechnet werden, in welcher sich das Objekt physikalisch befinden darf (205). Alle Punkte des Tiefenbildes, welche sich außerhalb des erlaubten Bereiches befinden, können auf Null gesetzt oder eingeschwärzt werden (207). Damit wird das erlaubte Segment oder die erlaubte Region angezeigt. Die erlaubte Region des Tiefenbildes kann jetzt als Overlay über das Realbild gelegt werden. Alle Regionen des Realbildes werden ausgeblendet oder selbst eingeschwärzt, wenn sie in Bereiche des Tiefenbildes liegen, welche nicht erlaubt sind (208). Somit werden die unerlaubten Bereiche im Realbild ausgeblendet und sind visuell nicht mehr ersichtlich. Das Realbild ist als Teilbild verkleinert worden. In diesem Bild kann jetzt ein Objekttracking durchgeführt werden (209). Objekte, z.B. Gesichter, sind jetzt im Realbild nicht mehr ersichtlich, wenn sie sich in unerlaubten Distanzen zur Kamera befinden. Es kann nur mehr auf Objekte in einem eingeschränkten Teilbild getrackt werden. Das Teilbild zeigt visuell die physikalisch möglichen Regionen des ursprünglichen Realbildes an. Ist das gewünschte Objekt A nach wie vor im Teilbild vorhanden (210), so wird eine neue Trackingposition X_{A}(n), Y_{A}(n) für das Objekt A berechnet (212). Diese Position und die aus dem Tiefenbild jetzt berechnete zugehörige neue Distanz D_{A}(n) des Objekts A (213) kann für das nächste zu trackende Bild übergeben werden. Idealer Weise durchlaufen die neu gewonnen Werte noch eine Kalman-Filterung. Die neue gültige Distanz D_{A}(n) wird für die Fokusverstellung herangezogen und dem Lens Control System (214) übermittelt um den Fokus der Kamera entsprechend einzustellen. Wurde keine neue gültige Distanz ermittelt, so verbleibt der Fokus solange auf seiner letzten gültigen Position, bis ein neuer gültiger Wert berechnet wird.

## Patentansprüche

1. Verfahren zum Fokussieren einer Kamera (1), **wobei das** Sichtfeld (3) der Kamera (1) in zumindest zwei Segmente (5,6) unterteilt wird und wobei zumindest den zwei Segmenten (5,6) jeweils zumindest ein Bedienelement (7) oder zumindest eine Stellung eines Bedienelements (7) zugeordnet wird und in zumindest zwei Segmenten (5,6) jeweils zumindest ein Objekt (A,B) erkannt und verfolgt wird, und die erkannten zumindest zwei Objekte (A,B) abhängig davon, welchem Segment (5,6) sie zugeordnet sind, dem jeweiligen Bedienelement (7) oder Stellung des Bedienelements (7) automatisch zugeordnet werden und bei Betätigung des Bedienelements (7) oder Bringung des Bedienelements (9) in die entsprechende Stellung die Kamera (1) auf das dem Bedienelement (7) oder der Stellung des Bedienelements (9) zugeordnete Objekt (A,B) fokussiert wird.

2. Verfahren nach Anspruch 1, **dadurch gekennzeichnet, dass** diese automatische Zuordnung zumindest zweier Objekte (A,B) zu je einem Bedienelement (7) oder Stellung eines Bedienelements (7) aufrecht erhalten wird, wenn sich zumindest ein Objekt (A,B) in ein anderes Segment bewegt, dem es nicht zugeordnet ist.

3. Verfahren nach Anspruch 1 oder 2, **dadurch gekennzeichnet, dass** zumindest ein Bedienelement (7) ein Knopf, Drehknopf, Joystick oder ein Schieberegler mit zumindest zwei Stellungen ist.

4. Verfahren nach einem der Ansprüche 1 bis 3, **dadurch gekennzeichnet, dass** Tiefendaten zumindest in einem Teil des Sichtfeldes (3) der Kamera (1) erfasst werden und zumindest einem Teil der Bildbestandteile des Sichtfelds (3) diesen Tiefendaten zugeordnet werden und vor der Zuordnung vorzugsweise eine weitere Kamera (4) ein Realbild aufnimmt und zumindest einem Teil der Bildbestandteile des Realbilds den Tiefendaten zugeordnet werden.

5. Verfahren nach Anspruch 4, **dadurch gekennzeichnet, dass** die Segmente (5,6) zumindest teilweise nicht nur durch Seitenränder, sondern auch durch Tiefenränder begrenzt werden.

6. Verfahren nach einem der Ansprüche 1 bis 5, **dadurch gekennzeichnet, dass** Tiefendaten zumindest in einem Teil des Sichtfeldes (3) der Kamera (1) erfasst werden, und zumindest einem Teil der Bildbestandteile des Sichtfelds (3) zugeordnet werden und dass zumindest ein Teil der Tiefendaten zur visuellen Erkennung und Verfolgung des zumindest eines Objekts (A) herangezogen werden.

7. Verfahren nach einem der Ansprüche 1 bis 6, **dadurch gekennzeichnet, dass** in dem Sichtfeld (3) der Kamera (1) zumindest ein Segment definiert wird und auf ein erkanntes und verfolgtes Objekt (A) fokussiert wird, sobald es sich im Segment befindet.

8. Verfahren nach einem der Ansprüche 1 bis 7, **dadurch gekennzeichnet, dass** zumindest einem Objekt (A) ein maximaler Bewegungsspielraum (10) pro Zeiteinheit zugeordnet wird und dieser Bewegungsspielraum (10) in die Objekterkennung und Objektverfolgung mit einbezogen wird.

9. Verfahren nach Anspruch 8, **dadurch gekennzeichnet, dass** zumindest ein Objekt (A) einer Objektklasse zugeordnet wird und der Bewegungsspielraum (10) abhängig von der Objektklasse gewählt wird.

10. Verfahren nach einem der Ansprüche 1 bis 9, **dadurch gekennzeichnet, dass** die Objekterkennung eine Merkmalsanalyse umfasst, bei der visuelle Merkmale eines Objekts (A) in einem Bereich gesucht, analysiert und identifiziert werden und das Objekt (A) anhand dieser Merkmale erkannt und deren Bewegung verfolgt werden.

11. Verfahren nach einem der Ansprüche 1 bis 10, **dadurch gekennzeichnet, dass** die Objekterkennung die Erkennung über einen Deep-Learning-Algorithmus umfasst.

12. Verfahren nach einem der Ansprüche 4 oder 6, **dadurch gekennzeichnet, dass** die Erfassung der Tiefendaten zumindest teilweise über zumindest einen 3D Sensor (2) erfolgt, der vorzugsweise an der Kamera (1) angebracht ist.

13. Verfahren nach einem der Ansprüche 4, 6 oder 12, **dadurch gekennzeichnet, dass** eine weitere Kamera (4) ein Realbild aufnimmt und zumindest einem Teil der Bildbestandteile des Sichtfelds den Tiefendaten zugeordnet werden.

14. Verfahren nach einem der Ansprüche 4, 6, 12 oder 13, **dadurch gekennzeichnet, dass** die Erfassung der Tiefendaten die Triangulation von Daten von zumindest zwei Hilfskameras umfasst.

## Claims

1. Method for focusing a camera (1), **wherein the** field of view (3) of the camera (1) is divided into at least two segments (5, 6), and wherein at least one operating element (7) or at least one position of an operating element (7) is in each case assigned to at least the two segments (5, 6), and at least one object (A, B) is in each case recognized and tracked in at least two segments (5, 6), and the recognized at least two objects (A, B) are automatically assigned to the respective operating element (7) or position of the operating element (7) depending on which segment (5, 6) they are assigned to, and when the operating element (7) is actuated or the operating element (9) is brought into the corresponding position, the camera (1) is focused on the object (A, B) assigned to the operating element (7) or the position of the operating element (9).

2. Method according to claim 1, **characterised in that** this automatic assignment of at least two objects (A, B) to one operating element (7) each or position of an operating element (7) is maintained if at least one object (A, B) moves to another segment to which it is not assigned.

3. Method according to claim 1 or 2, **characterised in that** at least one operating element (7) is a knob, rotary knob, joystick or slider having at least two positions.

4. Method according to one of the claims 1 to 3, **characterised in that** depth data are recorded at least in a part of the field of view (3) of the camera (1) and at least a part of the image components of the field of view (3) are assigned to these depth data, and before the assignment preferably a further camera (4) records a real image and at least a part of the image components of the real image are assigned to the depth data.

5. Method according to claim 4, **characterised in that** the segments (5,6) are at least partially delimited not only by side edges but also by depth edges.

6. Method according to one of claims 1 to 5, **characterised in that** depth data are acquired at least in a portion of the field of view (3) of the camera (1), and are associated with at least a portion of the image components of the field of view (3), and **in that** at least a portion of the depth data are used for visual recognition and tracking of the at least one object (A).

7. Method according to one of claims 1 to 6, **characterised in that** at least one segment is defined in the field of view (3) of the camera (1) and is focused on a recognized and tracked object (A) as soon as it is located in the segment.

8. Method according to one of claims 1 to 7, **characterised in that** at least one object (A) is assigned a maximum movement range (10) per time unit and this movement range (10) is included in the object recognition and object tracking.

9. Method according to claim 8, **characterised in that** at least one object (A) is assigned to an object class and the movement range (10) is selected depending on the object class.

10. Method according to one of claims 1 to 9, **characterised in that** the object recognition comprises feature analysis in which visual features of an object (A) in an area are searched, analyzed and identified, and the object (A) is recognized based on these features and its movement is tracked.

11. Method according to one of claims 1 to 10, **characterised in that** the object recognition comprises recognition via a deep-learning algorithm.

12. Method according to one of claims 4 or 6, **characterised in that** the acquisition of the depth data is performed at least in part via at least one 3D sensor (2), which is preferably attached to the camera (1).

13. Method according to one of claims 4, 6 or 12 **characterised in that** a further camera (4) records a real image and at least some of the image components of the field of view are assigned to the depth data.

14. Method according to one of claims 4, 6, 12 or 13, **characterised in that** the acquisition of depth data comprises triangulation of data from at least two auxiliary cameras.

## Revendications

1. Procédé pour la mise au point d'une caméra (1), selon lequel
- on subdivise le champ de vision (3) de la caméra (1) en au moins deux segments (5, 6), et
- on associe au moins aux deux segments (5, 6) à au moins un élément de manoeuvre (7) ou à au moins une position d'un élément de manoeuvre (7), et
- on reconnait au moins un objet (A, B) dans au moins deux segments (5,6) et on le suit, et
au moins les deux objets reconnus (A, B) sont associés automatiquement à l'élément de manoeuvre (7) respectif ou à la position de l'élément de manoeuvre (7) en fonction du segment (5, 6) dont ils dépendent et par l'actionnement de l'élément de manoeuvre (7) ou la mise de l'élément de manoeuvre (9) dans la position correspondante , on met au point la caméra (1) sur l'objet (A, B) associé à l'élément de manoeuvre (7) ou à la position de l'élément de manoeuvre (9).

2. Procédé selon la revendication 1,
**caractérisé en ce que**
cette association automatique d'au moins deux objet (A, B) respectivement chaque fois à un élément de manoeuvre (7) ou à la position de l'élément de manoeuvre (7) est conservée lorsqu'au moins un objet (A, B) se déplace dans un autre segment auquel il n'est pas associé.

3. Procédé selon la revendication 1 ou 2,
**caractérisé en ce que**
au moins un élément de manoeuvre (7) est un bouton, un bouton tournant, une manette ou une réglette avec au moins deux positions.

4. Procédé selon l'une des revendications 1 à 3,
**caractérisé en ce que**
on saisit les données de profondeur d'au moins une partie du champ de vision (3) de la caméra (1) et on associe ces données de profondeur à au moins une partie du composant d'image du champ de vision (3) et de préférence avant l'association une autre caméra (4) prend une image réelle et on associe au moins une partie des composants de l'image réelle aux données de profondeur.

5. Procédé selon la revendication 4,
**caractérisé en ce que**
les segments (5, 6) sont au moins en partie non seulement délimités par des bords latéraux mais également par des bords de profondeur.

6. Procédé selon l'une des revendications 1 à 5,
**caractérisé en ce que**
les données de profondeur sont saisies dans au moins une partie du champ de vision (3) de la caméra (1) et elles sont associées à au moins une partie des composants d'image du champ de vision (3), et
- au moins certaines des données de profondeur sont utilisées pour la reconnaissance visuelle et la poursuite d'au moins un objet (A).

7. Procédé selon l'une des revendications 1 à 6,
**caractérisé en ce que**
on définit au moins un segment dans le champ de vision (3) de la caméra (1) et on met au point sur l'objet (A) reconnu et poursuivi dès qu'il se trouve dans le segment.

8. Procédé selon l'une des revendications 1 à 7,
**caractérisé en ce que**
on associe à au moins un objet (A), un espace de jeu de mouvement (10) maximum par unité de temps et on intègre cet espace de mouvement (10) dans la reconnaissance d'objet et la poursuite d'objet.

9. Procédé selon la revendication 8,
**caractérisé en ce que**
on associe au moins un objet (A) à une classe d'objets et l'espace de mouvement (10) est choisi en fonction de la classe d'objets.

10. Procédé selon l'une des revendications 1 à 9,
**caractérisé en ce que**
la reconnaissance d'objet comprend une analyse de caractéristiques selon laquelle on recherche, on analyse et on identifie les caractéristiques visuelles d'un objet (A) dans une plage et on reconnait l'objet (A) à l'aide de cette caractéristique et on suit son mouvement.

11. Procédé selon l'une des revendications 1 à10,
**caractérisé en ce que**
la reconnaissance d'objet comprend une reconnaissance par un algorithme d'apprentissage profond.

12. Procédé selon l'une des revendications 4 ou 6,
**caractérisés en ce que**
la saisie des données de profondeur se fait au moins en partie par au moins un capteur 3D (2) installé de préférence sur la caméra (1).

13. Procédé selon l'une des revendications 4, 6 ou 12,
**caractérisé en ce que**
une autre caméra (4) prend une image réelle et on attribue les données de profondeur à au moins une partie des composants d'image du champ de vision.

14. Procédé selon l'une des revendications 4, 6, 12 ou 13,
**caractérisé en ce que**
la saisie des données de profondeur comprend la triangulation des données fournies par au moins deux caméras auxiliaires.
